# NEUE EUROPÄISCHE PATENTSCHRIFT

(11) **EP 0 648 952 B2**
(45) Veröffentlichungstag und Bekanntmachung des Hinweises auf die Entscheidung über den Einspruch: **04.06.2003**
(45) Hinweis auf die Patenterteilung: 29.11.2000
(21) Anmeldenummer: 94103781.4
(22) Anmeldetag: 11.03.1994
(51) Int. Cl.: F16D 65/56

(54) **Druckluftbetätigte Scheibenbremse**
Air operated disc brake
Frein à disque actionné par air comprimé

(30) Priorität: 13.10.1993 DE 4334914
(43) Veröffentlichungstag der Anmeldung: 19.04.1995
(60) Teilanmeldung: 00111457.8
(73) Patentinhaber: KNORR-BREMSE Systeme für Nutzfahrzeuge GmbH, 80809 München (DE)
(72) Erfinder: Baumgartner, Hans, D-85368 Moosburg (DE); Bieker, Dieter, D-81827 München (DE); Iraschko, Johann, D-85301 Schweitenkirchen (DE)
(74) Vertreter: Specht, Peter, Dipl.-Phys.

(56) Entgegenhaltungen:
- DE-A- 3 716 202
- DE-A- 4 032 885
- DE-A- 4 034 165
- DE-A- 4 204 307
- DE-C- 482 769
- US-A- 4 064 973
- Dubbel, Taschenbuch für den Maschinenbau, 15. Auflage 1983

## Beschreibung

Die vorliegende Erfindung bezieht sich auf eine druckluftbetätigte Scheibenbremse gemäß dem Oberbegriff des Anspruchs 1.

Druckluftbetätigte bzw. pneumatische Scheibenbremsen der gattungsgemäßen Art sind beispielsweise aus der DE-OS 37 16 202, der DE-OS 40 32 885 sowie aus der nicht vorveröffentlichten DE-OS 42 12 384 bekannt. Bei diesen bekannten Scheibenbremsen wird eine Bremsscheibe von einem in Axialrichtung verschiebbar gelagerten Bremssattel umfaßt, wobei auf einer Seite des Bremssattels eine druckluftbetätigte Zuspannvorrichtung angeordnet ist, bei deren Betätigung eine auf dieser Seite der Bremsscheibe befindliche Bremsbacke gegen die betreffende Reibfläche der Bremsscheibe gedrückt wird, worauf sich der Bremssattel aufgrund der Reaktionskräfte in Gegenrichtung verschiebt und dadurch eine auf der gegenüberliegenden Seite befindliche Bremsbacke gleichfalls gegen die Bremsscheibe preßt.

Die Zuspannvorrichtung weist bei diesen bekannten Scheibenbremsen als Betätigungsorgan einen Drehhebel auf, der um eine zur Ebene der Bremsscheibe parallel verlaufende Drehachse schwenkbar gelagert ist. Der Drehhebel liegt hierbei auf seiner der Bremsscheibe zugewandten Seite mittels eines Exzenters etwa längsmittig an einer sich parallel zur Drehachse erstreckenden Traverse an, die bezüglich der Bremsscheibe verschiebbar geführt ist und in der zwei mit einem Außengewinde versehene Stellspindeln in einem jeweils zugeordneten Innengewinde der Traverse in paralleler Anordnung verstellbar verschraubt sind. Aufgrund der Verwendung zweier Stellspindeln wird eine derartige Zuspannvorrichtung auch als "zweispindelige" Zuspannvorrichtung bezeichnet.

Die beiden Stellspindeln wirken jeweils über ein an ihrem bremsscheibenseitigen Ende sitzendes Druckstück auf die zuspannseitig im Bremssattel bezüglich der Bremsscheibe verschiebbar gelagerte Bremsbacke ein. Mittels mindestens einer Nachstelleinrichtung, die axial verschiebbar, jedoch drehfest mit einer der beiden Stellspindeln gekoppelt ist und bei jeder Betätigung des Drehhebels über eine Rutschkupplung auf die betrefende Steilspindel einwirkt, wird ereicht, daß das sich infolge Belagverschleiß ändernde Lüftspiel seinen korrekten Sollwert konstant beibehält. Die von der Nachstelleinrichtuno im Falle von Belagverschleiß bewirkte Drehung der genannten Stellspindel wird von einer Synchronisationseinrichtung so auf die andere Stellspindel übertragen, daß diese um den gleichen Winkel gedreht wird und folglich ihren Abstand zur Bremsscheibe um exakt dis gleiche Wegstrecke verringert.

Im einfachsten Fall ist in der genannten zweiten Stellspindel lediglich eine Mitnehmervorrichtung angeordnet, welche diese Stellspindel drehfest mit der Synchronisationseinrichtung koppelt und beispielsweise aus einem in eine innere Axialverzahnung der Stellspindel eingreifenden Zahnrad gebildet sein kann, das über eine Welle mit der Synchronisationseinrichtung gekoppelt ist. Jedoch kann für die zweite Stellspindel gleichfalls eine eigene Nachstelleinrichtung vorgesehen sein, wobei in diesem Fall doppelt so große Nachstellkräfte erzielbar sind, was jedoch mit entsprechend höheren Herstellungskosten verbunden ist.

Wenn lediglich eine Stellspindel vorhanden ist ("einspindelige" Zuspannvorrichtung), entfällt selbstverständlich die Synchronisationseinrichtung.

Wie bereits vorstehend erläutert wurde, ist die präzise Einstellung eines stets gleich großen Lüftspiels für die sichere und zuverlässige Funktion der gattungsgemäßen Scheibenbremsen von wesentlicher Bedeutung. Obgleich die von der Anmelderin bereits entwickelten Nachstelleinrichungen zuverlässig und hochgenau arbeiten (diesbezüglich sei beispielsweise auf die DE-OS 40 34 165 der Anmelderin verwiesen), hat es sich in der Praxis dennoch als schwierig erwiesen, das Lüftspiel im gewünschten Toleranzbereich zu halten. Insbesondere tritt in der Praxis häufig eine ungewollte Verkleinerung des Lüftspiels auf, so daß die Bremse ggf sogar zum Blockieren neigen kann.

Der Erfindung lieg demnach die Aufgabe zugrunde, eine druckluftbetätigte Scheibenbremse gemäß dem Oberbegriff des Anspruchs 1 derart weiterzubilden, daß stets ein konstant großes Lüftspiel erzielbar ist.

Diese Aufgabe wird erfindungsgemäß mit den im Kennzeichnungsteil des Anspruchs 1 angegebenen Maßnahmen gelöst.

Ausführliche Untersuchungen haben ergeben, daß die genannten Probeme im Zusammenhang mit dem sich trotz korrekter Funtion der Nachstelleinrichtung ändernden Lüftspiels darauf zurückzuführen sind, daß die jeweilige Stellspindel bei starker Rüttelbeanspruchung die Tendenz hat selbsttätig bzw. ohne entsprechende Drehmomentbeaufschlagung durch die Nachstelleinrichtung eine Drehbewegung auszuführen und zwar insbesondere in Nachstellrichtung, da die Nachstelleinrichtung in der Rege eine Richtungskupplung aufweist, die eine Drehung der Stellspindel entgegen der Nachstellrichtung ver hindert. In dieseungewollten Drehbewegung der Stellspindel(n) ist somst die Ursache für die unerwünsente Anderung des Lüftspiels zu sehen.

Durch die Einrichtung die jedes Drehen der Gewin despindel(n) bis zu einem bestimmten Drehmoment verhindert, wird erreicht, daß jede in der Praxis auftretende Rüttelbeanspruchung sicher außerstande ist, eine ungewollte Drehung der Stellspindel(n) herbelzuführen, so daß das Lüftspiel stets konstant bleibt Gelchwohl ist die Nachstelleinrichtung bei geigneter Wahl des Drehmoments in der Lage, die Stellspindel(n) der Auftritt von Bremsbelagverschleiß zu drehen, wobei das hierfür erforderliche, etwas erhöhte Drehmoment bei den gegebenen Kräftverhältnissen bzw. Antriebsleistungen der Nachstelleinrichtung keinerlei Probleme bereitet.

Das erforderliche Bremsmoment für die jeweilige Stellspindel, wird mittels des elastischen Elements eines Reibringes erreicht, das direkt auf die Gewindefläche der betreffenden Gewindespindel einwirkt. Der Reibring kann aus Gummi oder dergleichen bestehen, am bremsscheibenzugewandten bzw. äußeren Ende der betreffenden Gewindebohrung der Traverse befestigt sein. Der Innendurchmesser kann kleiner als der Außendurchmesser der Gewindespindelsein. Diese Anordnung ist besonders einfach und kostengünstig und hat darüber hinaus den Vorteil, daß eine zusätzliche Abdichtung für die rostempfindlichen Gewindeflächen der Stellspindel und der Traverse geschaffen wird. Selbstverständlich kann der genannte Reibring auch am bremsscheibenabgewandten bzw. inneren Ende der Bohrung vorgesehen werden; ggf. kann schließlich auch eine gleichzeitige Anordnung am inneren und äußeren Ende von Vorteil sind.

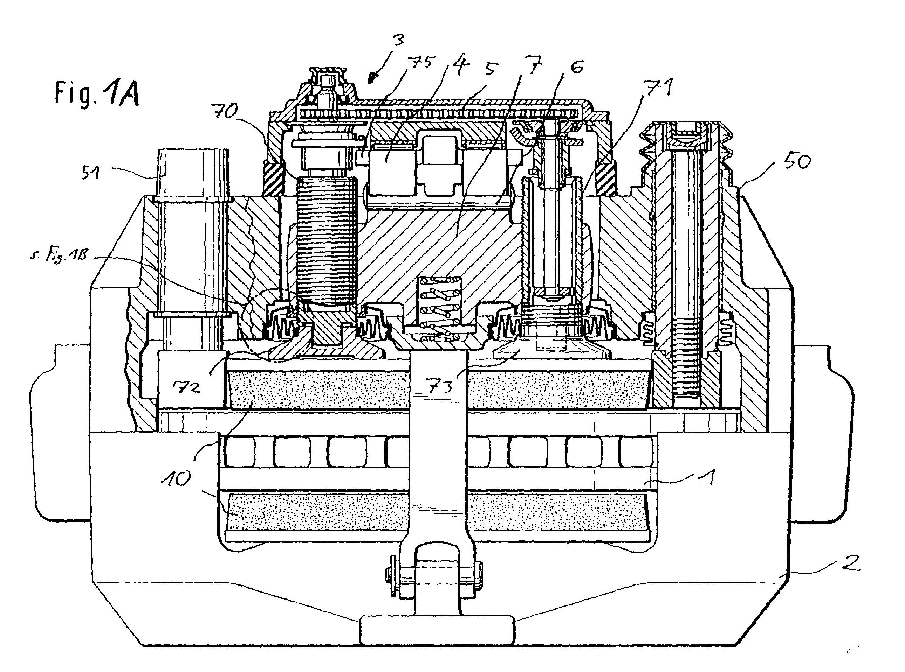

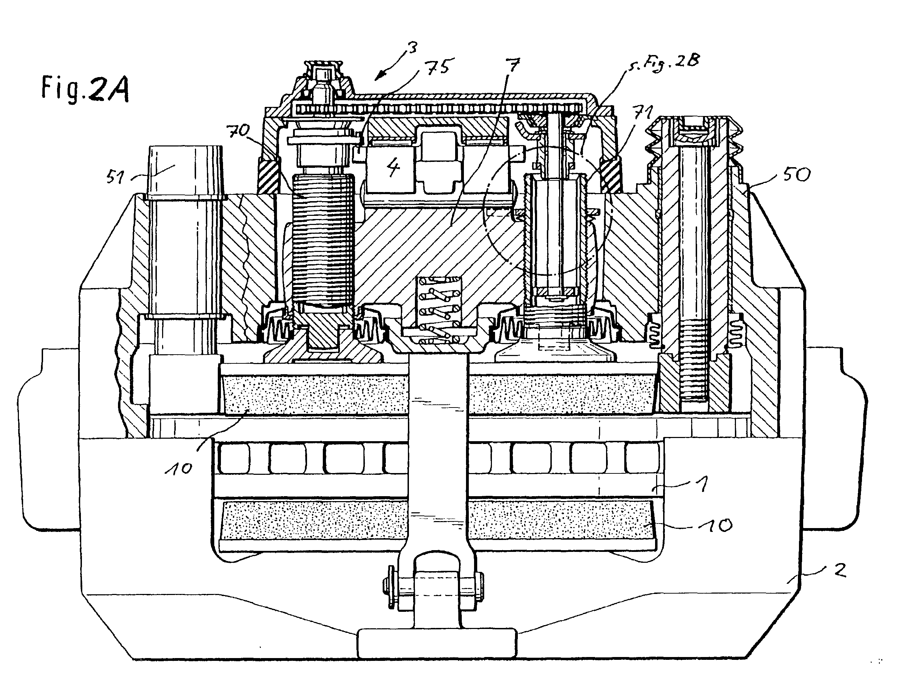

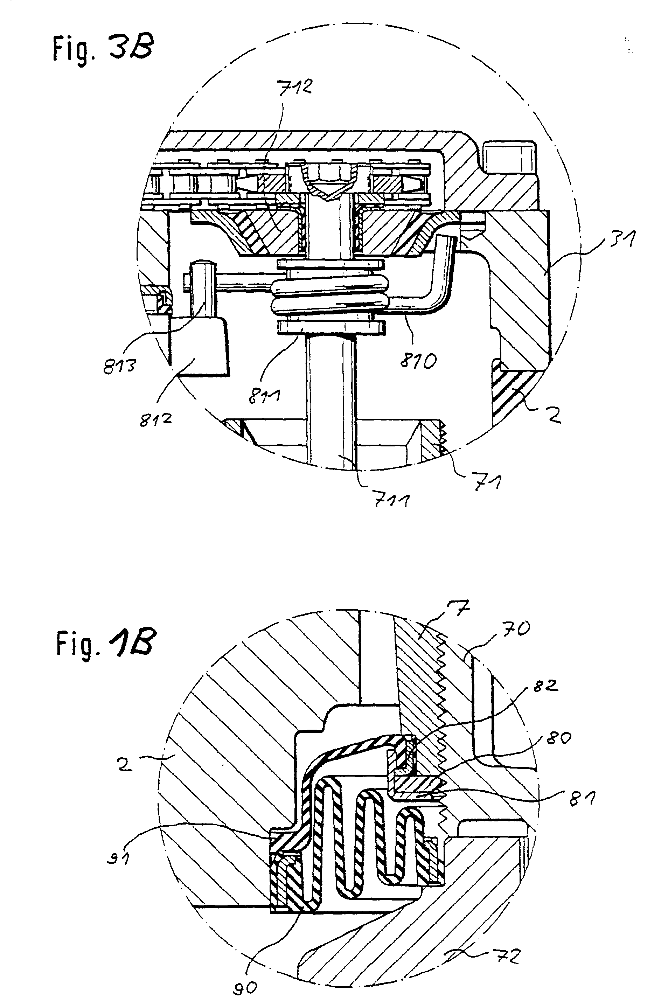

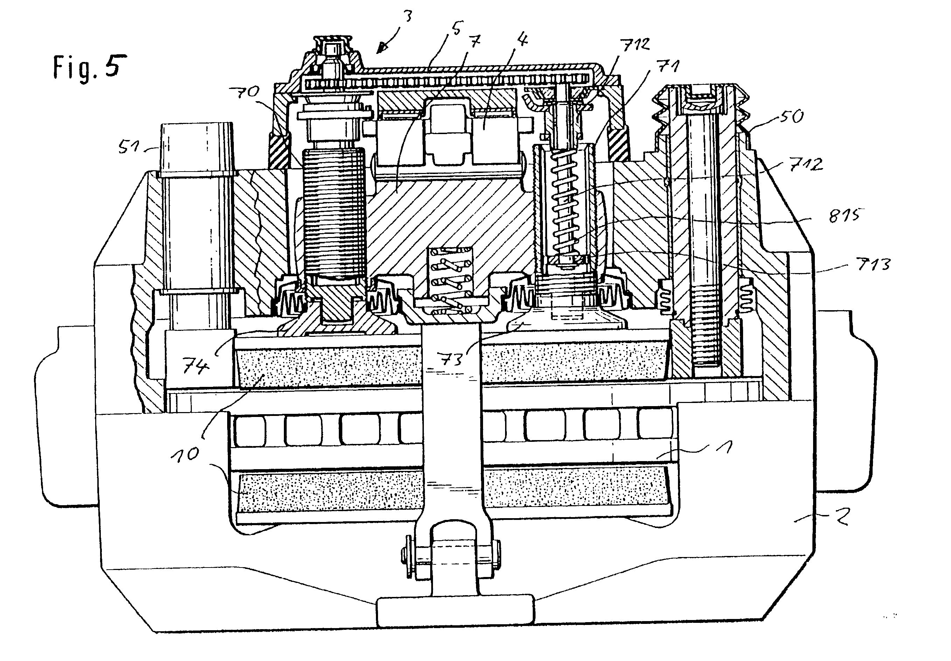

Die Erfindung wird nunmehr nachstehend anhand der Beschreibung von Ausführungsbeispielen unter Bezugnahme auf die Zeichnung näher erläutert. In Fig. 1A und 1B wird der Erfindungsgegenstand dargestellt. Die Fig. 2 bis 7 zeigen Ausgestalhungen der Bremse, die ihre Funktion verdentlichen ohne daß dabei der eigentliche Anspruchsgegenstand dargestellt wird. Es zeigen:
Fig.1A und 1B anhand von Querschnittsansichten den Aufbau eines ersten Ausführungsbeispiels der Erfindung, wobei Fig.1B eine vergrößerte Teilansicht der Fig.1 A wiedergibt;
Fig.2A und 2B eine entsprechende Darstellung eines zweiten Ausführungsbeispiels;
Fig.3A und 3B eine entsprechende Darstellung eines dritten Ausführungsbeispiels;
Fig.4A und 4B eine welteres Ausführungsbeispiel, bei dem die Klemmung de Stellspindeln durch eine Stirnverzahnung erfolgt;
Fig.5 eine Variante des in Fig.3 gezeigtenAusführungsbeispiels;
Fig.6A bis 6C ein welteres Ausführungsbeispiel, das für eine Synchronisationseinnchtung mit einer Gliederkette geeignet ist: und
Fig.7A und 7B ein Ausführungsbeispiel, das für eine Synchronisationseinrichtung mit einem Getriebzug geeignet ist.

Um die der Erfindung zugrundeliegende Problematik zu verdeutlichen, sollen zunächst der prinzipielle Aufbau und die Wirkungsweise der gattungsgemäßen Scheibenbremse und deren Zuspannvorrichtung näher erläutert werden.

Wie aus den Figuren 1A und 7A zu erkennen ist, wird eine (innenbelüftete) Bremsscheibe 1, die an einer nicht näher bezeichneten Achse eines Nutzfahrzeugs befestigt ist, von einem Bremssattel 2 umfaβt. Der Bremssattel 2 ist gemäß Fig.1A mittels eines starren Führungslagers 52 sowie mittels eines Ausgleichslagers 51 in axialer Verschiebbarkeit bezüglich der Bremsscheibe 1 am Fahrzeug gelagert. Im übrigen sind Aufbau und Funktion des Bremssattels bekannt, so daß sich eine nähere Erläuterung erübrigt.

Auf der in Fig. 7A rechten bzw. der in Fig. 1A oberen Seite der Bremsscheibe 1 ist eine schematisch mit dem Bezugszeichen 3 bezeichnete zweispindelige Zuspannvorrichtung angeordnet. Im Bremssattel 2 ist ein im wesentlichen halbkreisförmiges Drehlager 30 vorgesehen, dessen Drehachse parallel zur Ebene der Bremsscheibe 1 verläuft und das den entsprechend abgerundeten Bereich eines Drehhebels 4 aufnimmt, so daß der Drehhebel 4 parallel zur Ebene der Bremsscheibe 1 verschwenkt werden kann. Zur Betätigung des Drehhebels 4 ist ein lediglich schematisch dargestellter Bremszylinder 42 vorgesehen, der mit einem Kolben in eine geeignet geformte Ausnehmung eines Betätigungsarms 4a des Drehhebels 4 eingreift. Wenn der Bremszylinder 40 mit der Druckluft beaufschlagt wird, wird der Betätigungsarm 4a des Drehhebels 4 folglich von seiner gezeigten Ruheposition in der Darstellung der Fig.7A nach links bewegt. Es sei angemerkt, daß die Betätigung des Drehhebels 4 selbstverständlich auch über ein Bremsgestänge erfolgen kann, so daß der Bremszylinder 42 gegebenenfalls an einem anderen Ort plaziert werden kann, falls der Einbauraum für die Bremsscheibe begrenzt ist.

Die dem halbschalenförmigen Drehlager 30 abgewandte Seite des Drehhebels 4 ist über einen als Nocken dienenden Exzenter 6 mit einer Traverse 7 gekoppelt, die sich innerhalb des Bremssattels 2 im wesentlichen parallel zur Drehachse der Bremsschelbe 1 erstreckt und in dieser Ebene verschiebbar gelagert ist. An ihrem der Bremsscheibe 1 zugewandten Ende weist die Traverse 7 eine sacklocnartige Ausnehmung auf, die von einem in Richtung zur Bremsscheibe 1 auskragenden, rohrartigen Ansatz umgeben ist. Dieser Ansatz der Traverse 7 ist in einer entsprechenden Ausnehmung des Bremssattels 2 rechtwinklig zur Ebene der Bremsscheibe 1 unter Beibehaltung eines derartigen Spiels schiebegelagert, daß die Traverse 7 geringfügige Schwenkbewegungen in der Zeichnungsebene ausführen kann. Innerhalb der Ausnehmung ist eine Spiralfeder 78 angeordnet, die zwischen die Traverse 7 und das der Bremsscheibe 1 zugewandte Ende des Bremssattels 2 eingespannt ist und dadurch die Traverse 7 zum Drehhebel 4 hin vorspannt.

Wie insbesondere den Längsschnitten der Figuren 1A, 2A, 3A und 4A entnehmbar ist, weist die Traverse 7 an beiden Seiten jeweils eine mit einem Innengewinde versehene Bohrung auf, in der jeweils eine Stellspindel 70 bzw. 71 justierbar verschraubt ist deren Außengewinde in einem entsprechend geformten Innengewinde der Traverse 7 geführt ist. An dem der Bremsscheibe 1 zugewandten Ende jeder der Stellspindeln 70 und 71 ist ein sich kegelförmig verbreiterndes Druckstück 72 bzw. 73 befestigt. Da sich die beiden Stellspindeln 70 und 71 infolge ihrer Anordnung in der Traverse 7 senkrecht zur Ebene der Bremsscheibe 1 erstrecken, liegen die Druckstücke 72 und 73 mit ihren flachen Enden an einer Bremsbacke 10 an. Die Bremsbacke 10 ist insbesondere in Umfangsrichtung zur Bremsscheibe 1 über nicht gezeigte Halterungen quer zur Bremsscheibe 1 verschiebbar geführt, wobei die Halterungen entweder dem Bremssattel 2 oder einem Bremsträger zugeordnet sein können.

Im Inneren der Stellspindel 70 ist eine (nicht gezeigte) Nachstelleinrichtung angeordnet, die infolge einer Axialverzahnung drehfest mit der Stellspindel 70 gekoppelt und in axialer Richtung verschiebbar ist. Der genaue Aufbau einer bevorzugten Ausführungsform der Nachstelleinrichtung ist in der eingangs genannten **DE-OS 40 34 165** der Anmelderin beschrieben, so daß für nähere Einzelheiten auf diese Druckschrift, auf die hiermit vollinhaltlich bezug genommen wird, verwiesen sei.

Die Nachstelleinrichtung wird bei jeder Betätigung des Drehhebels 4 um einen bestimmten Winkelbetrag gedreht, wodurch ein kontinuierliches Nachstellen der Bremse gewährleistet ist. Der genaue Aufbau einer derartigen Drehantriebseinrichtung für die Nachstelleinrichtung ist in der **DE-OS 42 04 307** der Anmelderin beschrieben, so daß für nähere Einzelheiten auf diese Druckschrift, auf die hiermit vollinhaltlich bezug genommen wird, verwiesen sei. Es sei jedoch darauf hingewiesen, daß die Art des Drehantriebs der Nachstelleinrichtung für die Erfindung nicht wesentlich ist; es ist alleine wichtig, daß bei jeder Betätigung der Bremse ein ausreichend starkes Nachstell-Drehmoment erzeugt und auf die Nachstelleinrichtung übertragen wird.

Im Inneren der gegenüberliegenden Stellspindel 71 ist keine Nachstelleinrichtung, sondern lediglich eine Mitnehmervorrichtung angeordnet, die aus einem Zahnrad 713 (siehe z.B. Fig.4B) gebildet ist, das in eine entsprechende Axialverzahnung der Stellspindel 71 eingreift und an einer Antriebswelle 711 befestigt ist, die im Gehäuse in einem Lager 712 gelagert ist, wie es aus der Fig.3B unmittelbar ersichtlich ist. Wie bereits eingangs erläutert wurde ist es alternativ hierzu auch möglich, in der Stellspindel 71 ebenfalls eine Nachstelleinrichtung vorzusehen, was ggf. den Vorteil hat, daß das Gesamt-Nachstelldrehmoment verdoppelt werden kann. Jedoch verteuert diese Lösung die Zuspannvorrichtung, so daß vorzugsweise von der hier beschriebenen Mitnehmervorrichtung Gebrauch gemacht wird.

Nachfolgend wird zum besseren Verständnis der Funktionsweise der erfindungsgemäßen Zuspannvorrichtung ihr Arbeitsprinzip kurz erläutert. Bei Druckluftbeaufschlagung des Bremszylinders 42 wird der Betätigungsarm 4a gemäß Fig.7A nach links verschwenkt, wodurch der am Drehhebel 4 wirkende Exzenter 6 um eine entsprechend den Hebelgesetzen verringerte Strecke gleichfalls nach links verschoben wird. Die Traverse 7 wird daher entgegen der Vorspannkraft der Spiralfeder 78 um diese Wegstrecke zur Bremsscheibe 1 hin gedrückt. Die an der Traverse 7 über die Stellspindeln 70 und 71 befestigten Druckstücke 72 bzw. 73 drücken folglich unter Überwindung des Lüftspiels (das in der Praxis ca. 0,4 mm beträgt) die Bremsbacke 10 gegen die Bremsscheibe 1. Wenn der Betätigungsarm 4a weiter nach links verschwenkt wird, verschiebt sich der Bremssattel aufgrund der auf die Bremsscheibe 1 ausgeübten Kraft in Fig. 1 nach rechts, so daß schließlich auch die linke Bremsbacke 10 gegen die Bremsscheibe 1 gepreßt wird. Da das Außengewinde der Stellspindeln 70 und 71 und das jeweils zugeordnete Innengewinde der Traverse 7 so dimensioniert sind, daß im druckbeaufschlagten Zustand entgegen der Zuspannrichtung eine Selbsthemmung auftritt, können sich die Stellspindeln nicht in diese Richtung wegbewegen, so daß der Bremsdruck solange aufrechterhalten bleibt, bis der Drehhebel 4 freigegeben wird.

Wenn die beiden Bremsbacken 10 im Verlauf des vorstehend erläuterten Zuspannvorgangs um eine vorbestimmte, einem Soll-Lüftspiel entsprechende Strecke verschoben worden sind, wird die Nachstelleinrichtung vom Drehhebel 4 betätigt. Sofern das Lüftspiel korrekt eingestellt ist, liegen beide Bremsbacken 10 zu diesem Zeitpunkt an der Bremsscheibe 1 an. Infolgedessen spricht eine in der Nachstelleinrichtung vorgesehene Rutschkupplung an, so daß die Stellspindel 70 und die mit ihr synchronisierte Stellspindel 71 nicht verstellt werden. Wenn demgegenüber ein zu großes Lüftspiel vorliegt, was beispielsweise nach einem Belagwechsel oder bei zunehmendem Verschleiß der Bremsbakken der Fall ist, werden die Stellspindeln 70 und 71 von der Nachstelleinrichtung um eine bestimmte Strecke gedreht und bringen dadurch das Lüftspiel, gegebenenfalls nach mehrmaliger Betätigung der Bremse, auf den Sollwert. Auf diese Weise ist gewährleistet, daß die erfindungsgemäße Scheibenbremse bis zum vollständigen Abrieb der Bremsbacken 10 funktionsfähig bleibt.

Nachstehend wird unter Bezugnahme auf die Fig.1A und 1B die Erfindung nähererläutert, mit der erreicht wird, daß die Stellspindeln 70 und 71 selbst bei starker Rüttelbeanspruchung oder dgl. keine Drehbewegung ausführen. Eine derartige Drehbewegung hätte zur Folge, daß die der Zuspannvorrichtung 3 zugewandte Bremsbacke 10 näher zur Oberfläche der Bremsscheibe 1 gedrückt werden würde, so daß sich das Lüftspiel entsprechend verringert. Diese Verringerung des Lüftspiels könnte im schlimmsten Fall sogar zum Blockieren der Scheibenbremse führen, was unter allen Umständen verhindert werden muß.

Gemäß Fig.1B, die den in Fig.1A gezeigten Ausschnitt in vergrößerter Darstellung wiedergibt, ist am unteren Rand der Gewindebohrung der Traverse 7, in der die jeweilige Stellspindel 70 bzw. 71 verschraubt ist, ein Reibring 80 aus Gummi oder ähnlichem elastomeren Material befestigt. Der Innendurchmesser dieses Reibrings 80 ist etwas kleiner als der Außendurchmesser der Stellspindel 70 bzw. 71. Der Reibring 80 übt demzufolge auf die betreffende Stellspindel ein Reibmoment aus, das verhindert, daß sich die Stellspindel bei Rüttelbeanspruchung selbsttätig dreht. Eine unerwünschte Änderung des Lüftspiels kann somit sicher verhindert werden.

Gemäß der Darstellung in Fig.1B ist der Innenraum der Zuspannvorrichtung mittels eines Faltenbalgs 90 und einer inneren Abdichtlippe 91 vor dem Eindringen von Wasser oder Schmutzteilen geschützt. Die innere Abdichtlippe 91 ist hierbei in einer Ausnehmung befestigt, die die Gewindebohrung der Traverse 7 an ihrem unteren Ende umgibt. Als Befestigungselement ist ein umlaufender Spannring 82 vorgesehen, der die Dichtlippe 91 sicher festhält. Der Spannring 82 weist ein zusätzliches Winkelteil 81 auf, das gemäß der Darstellung in Fig.1B so geformt ist, daß eine Tasche gebildet wird, die den erfindungsgemäßen Reibring 80 aufnimmt. Infolgedessen ist es möglich, den Reibring 80 durch die gezeigte, relativ geringfügige Modifikation der Befestigung der Dichtlippe 91 sicher und genau zu plazieren. Darüber hinaus wird eine zusätzliche Abdichtwirkung erzielt.

Selbstverständlich ist es möglich, den Reibring 80 auch am gehäuseinneren Austritt und der jeweiligen Stellspindel anzuordnen. Gegebenenfalls kann auch eine Doppelanordnung sowohl am gezeigten äußeren als auch am inneren Austritt der Stellspindel in Erwägung gezogen werden.

In den Fig.2A und 2B ist ein alternatives, nicht beanspruchtes Ausführungsbeispiel der Erfindung gezeigt, bei dem ein selbständiges Drehen der Stellspindel mittels einer Kontermutter 800 verhindert wird. Diese Kontermutter 800 ist etwas oberhalb des gehäuseinneren Austritts der Stellspindel 70 bzw. 71 angeordnet und durch einen Vorsprung, eine Ausnehmung oder dgl. an einer Drehung gehindert. Die Art und Weise der jeweiligen Drehsicherung der Kontermutter 80, die in Fig.2B linkerhand gestrichelt angedeutet ist, ist nicht weiter von Bedeutung und kann nach Belieben modifiziert werden. Wie aus Fig.2B ferner ersichtlich ist, wird die Kontermutter 800 durch eine Tellerfeder 801 in axialer Richtung vorgespannt. Infolgedessen tritt zwischen dem Innengewinde der Kontermutter 800 und dem Außengewinde der gezeigten Stellspindel 71 eine durch die Federkraft der Tellerfeder 801 definierte Reibung auf, die ein entsprechendes Bremsmoment erzeugt. Dieses Bremsmoment wird wie im Falle des vorstehend erläuterten Reibrings so gewählt, daß einerseits eine ungewollte Drehung der Stellspindel verhindert werden kann und daß andererseits die Nachstellbewegung der Stellspindel nicht zu stark behindert wird.

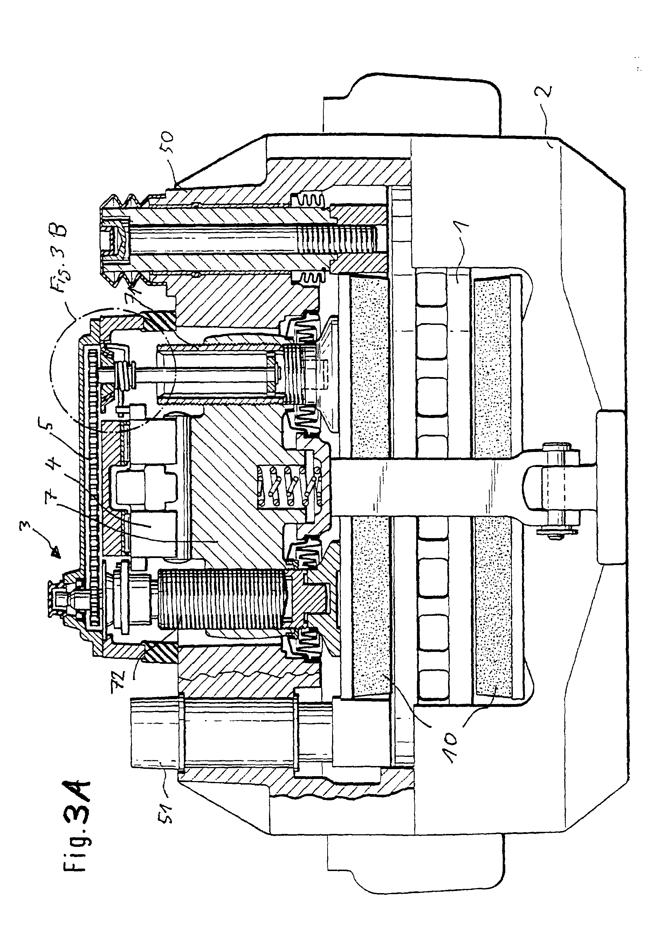

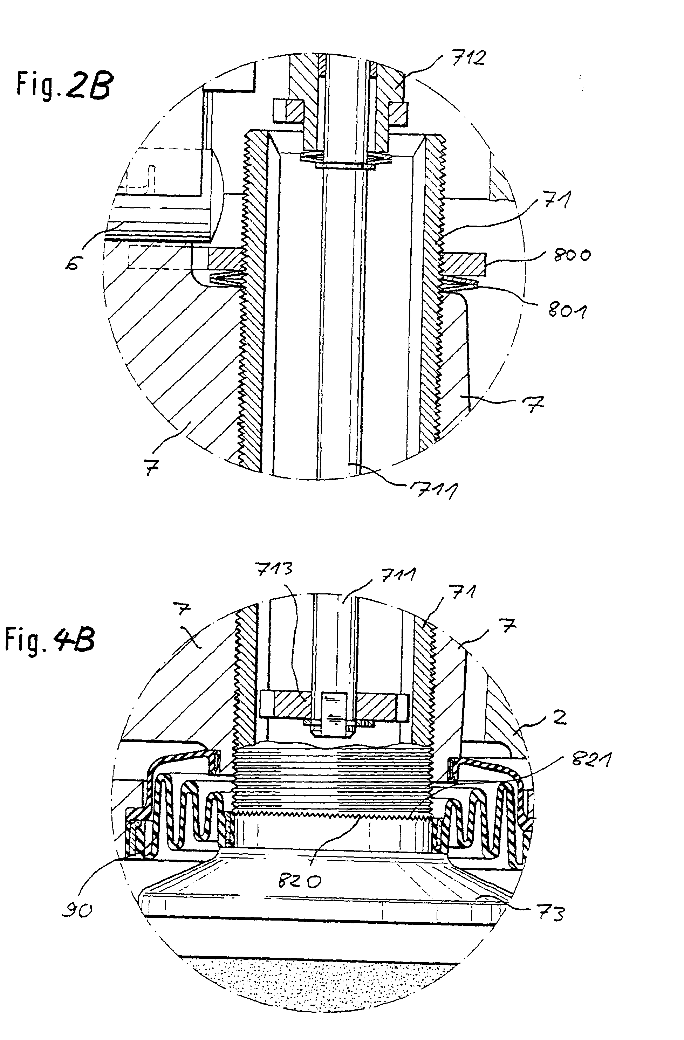

Die beiden vorstehend beschriebenen Ausführungsbeispiele basieren auf dem Prinzip, das Außengewinde der jeweiligen Stellspindel mit einem geeigneten Reibmoment zu beaufschlagen. Nachstehend werden anhand der Fig.3A und 3B sowie 5 zwei weitere Ausführungsbeispiele beschrieben, denen das Prinzip zugrundeliegt, das auf die Stellspindeln auszuübende Bremsmoment dadurch zu erzeugen, daß in dem Kraftübertragungsweg zwischen Nachstelleinrichtung und Gewindespindel eine Feder angeordnet wird, die das Reibmoment des Kraftübertragungswegs entsprechend erhöht.

Bei der in den Fig.3A und 3B gezeigten Ausführungsform ist eine Schraubenfeder 810 vorgesehen, die unter Zwischenschaltung einer Spindel 811 um die Antriebswelle 711 der Gewindespindel 71 herumgewikkelt ist. Mit ihrem einen, in Fig.3B rechts gezeigten Ende ist die Schraubenfeder 810 in einer Ausnehmung eines oberen Gehäuseteils 31 der Zuspannvorrichtung befestigt bzw. an einer Drehung gehindert. Das in Fig.3B rechts dargestellte, andere Ende der Schraubenfeder 810 liegt an einem Stift 813 an, der an einem Vorsprung 812 des Drehhebels 4 befestigt ist. Die Schraubenfeder 810 ist so dimensioniert und die Lage des Stifts 813 ist so gewählt, daß die Schraubenfeder 810 im gelösten Zustand der Bremse die Spindel 811 und damit die Antriebswelle 711 zuspannt. Über das am unteren Ende der Antriebswelle 711 sitzende Zahnrad 713 (siehe Fig.4B), ist die Stellspindel 71 somit daran gehindert, bei einer Rüttelbewegung oder dgl. selbsttätig zu drehen. Auch die zweite Stellspindel 70 ist an einer Drehung gehindert, da die Blockierung der Antriebswelle 711 über die als Kette realisierte Synchronisationseinrichtung 5 übertragen wird.

Wenn der Drehhebel 4 zum Bremsen betätigt wird, wird der an ihm befestigte Stift 813 in gleicher Weise verschwenkt, d.h. gemäß der Darstellung der Fig.3B nach hinten. Dadurch wird die Schraubenfeder 810 schließlich soweit entspannt, daß sie kein Reibmoment mehr auf die Spindel 811 ausübt. Die Antriebswelle 711 ist zu diesem Zeitpunkt frei drehbar, so daß die Nachstellung bei Bedarf problemlos erfolgen kann.

In Fig.5 ist eine Variante der vorstehend beschriebenen Ausführungsform gezeigt, bei der eine um die Antriebswelle 711 der Gewindespindel 71 herumgewickelte Schraubenfeder vorgesehen ist, die in axialer Richtung auf das am Ende der Antriebswelle 711 sitzende Zahnrad 713 einwirkt. Da die Schraubenfeder 815 mit ihrem bremsscheibenabgewandten Ende am Lager 712 der Antriebswelle 711 anliegt, erzeugt die Schraubenfeder 815 eine axiale Spannung, die auf die innenliegende Fläche des Zahnrads 713 ein entsprechendes Reibmoment ausübt. Dadurch wird das Reibmoment des gesamten Kraftübertragungswegs von der in der linken Stellspindel 71 angeordneten Nachstelleinrichtung über die Synchronisationseinrichtung 5 hinüber zur rechten Stellspindel 71 in gleichem Maße erhöht. Somit wird ebenfalls verhindert, daß sich die beiden Stellspindeln unter Einwirkung einer Rüttelbeanspruchung oder dgl. unbeabsichtigt verstellen; eine Änderung des Soll-Lüftspiegels ist somit ebenfalls ausgeschlossen.

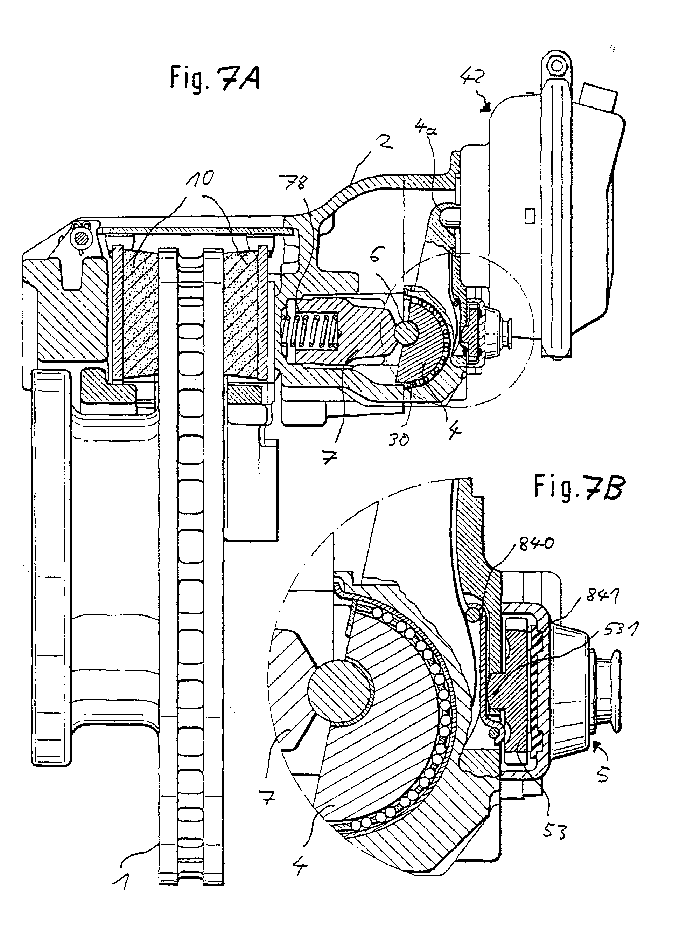

Die Ausführungsform der Fig.5 bietet im Vergleich zur vorstehend beschriebenen Ausführungsform den zusätzlichen Vorteil, daß die Schraubenfeder 815 aufgrund ihrer Drehelastizität einen permanenten Rückdreheffekt hervorruft, der bewirkt, daß die jeweiligen Übertragungselemente der Synchronisationseinrichtung 5 unter ständiger Vorspannung stehen. Insbesondere dann, wenn die Synchronisationseinrichtung wie im Falle des in Fig.7A und 7B gezeigten Ausführungsbeispiels aus einem Getriebezug in Form mehrerer Zahnräder gebildet ist, wird mit dieser Vorspannung erreicht, daß die Übertragungselemente bzw. Zahnräder der Synchronisationseinrichtung auch dann keinem erhöhten Verschleiß ausgesetzt sind, wenn eine hohe Rüttelbelastung auftritt.

Sämtliche bislang erläuterten Ausführungsbeispiele basieren auf dem Prinzip, die Stellspindeln zumindest im gelösten Zustand der Bremse mit einem bestimmten Bremsmoment zu beaufschlagen. Wenn hingegen eine zweispindelige Zuspannvorrichtung mit einer koppelnden Synchronisationseinrichtung vorgesehen ist, wie dies in sämtlichen Ausführungsbeispielen der Erfindung der Fall ist, ist es alternativ hierzu jedoch auch möglich, eine Einrichtung vorzusehen, die die Synchronisationseinrichtung im gelösten Zustand der Bremse blockiert. Auch auf diese Weise wird erreicht, daß die beiden Stellspindeln bei Rüttelbeanspruchung nicht selbsttätig drehen können, so daß eine ungewollte Änderung des Lüftspiels vermieden wird. Nachstehend werden zwei bevorzugte Ausführungsbeispiele für dieses alternative Prinzip beschrieben.

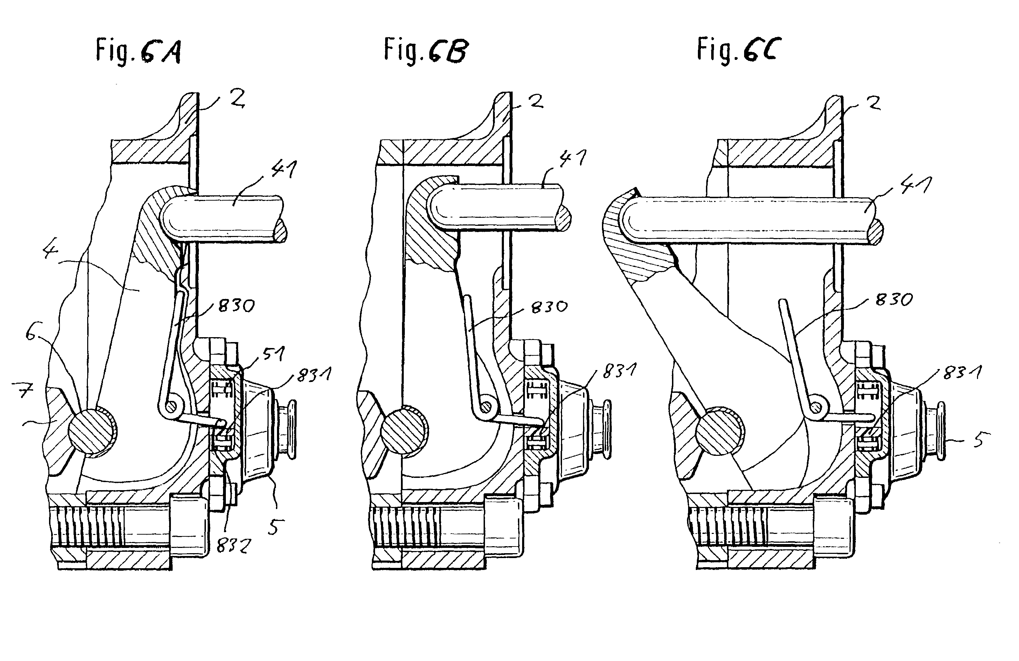

Die erste, anhand der Fig.6A bis 6C erläuterte Ausführungsform dieser Variante der Erfindung ist für eine Synchronisationseinrichtung vorgesehen, bei der die Kraftübertragung mittels einer Transmissionseinrichtung in Form einer Gliederkette 51 erfolgt. Alternativ hierzu kann es sich beispielsweise auch um einen Zahnriemen oder dgl. handeln. Gemäß Fig.6A ist auf der bremsscheibenabgewandten Seite des Drehhebels 4 ein Federelement 830 in der Weise befestigt, daß das zur Synchronisationseinrichtung 5 hin weisende stiftförmige Ende 832 des Federelements 830 eine bodenseitige Öffnung der Synchronisationseinrichtung 5 durchgreift und an einem verschiebbar gelagerten Element 831 federnd anliegt. Wie aus Fig.6A unmittelbar ersichtlich ist, drückt das verschiebbar gelagerte Element 831 infolge der Federkraft des Stifts 832 den betreffenden Abschnitt der Gliederkette 51 gegen eine Wandung bzw. Führung des Gehäuse der Synchronisationseinrichtung 5. Die Gliederkette 51 wird folglich eingeklemmt, so daß sie blockiert und die mit ihr gekoppelten Stellspindeln an einer Drehung hindert.

Wenn der Drehhebel 4 gemäß der Darstellung in den Fig.6B und 6C beim Zuspannen der Bremse von einer Betätigungsstange 41 des Bremszylinders nach links verschwenkt wird, gibt das stiftförmige Ende 832 des Federelements 830 das verschiebbare Element 831 frei, so daß dieses nicht mehr federbelastet ist; demzufolge wird die Klemmung der Gliederkette 51 beendet, so daß die Synchronisationseinrichtung eine gegebenenfalls erforderliche Nachstellbewegung der Nachstelleinrichtung übertragen kann.

Anstelle des verschiebbaren Elements 831 kann gegebenenfalls ein elastisches Teil vorgesehen werden, das sich bei anliegendem Stift 832 soweit zur Gliederkette 51 hin ausbeult, daß diese eingeklemmt wird.

In den Fig.7A und 7B ist eine Ausführungsform dargestellt, die zum Blockieren einer solchen Synchronisationseinrichtung vorgesehen ist, bei der die Kraftübertragung mittels mehrerer Zahnräder erfolgt, die einen Getriebezug bilden. Wie insbesondere aus Fig.7B zu erkennen ist, ist beispielsweise das mittlere Zahnrad 53 der Synchronisationseinrichtung 5 über einen Lagerzapfen 531 in einer entsprechenden Lagerbohrung drehbar gelagert. Am bremsscheibenabgewandten Ende des Drehhebels 4 sitzt eine Blattfeder 840, die im gezeigten, gelösten Zustand der Bremse das untere Ende des Lagerzapfens 531 berührt, wodurch das Zahnrad 53 mit einem nach außen gerichteten Axialdruck beaufschlagt wird. Auf der der äußeren Seite des Zahnrads 53 zugewandten Seite der Gehäuseabdeckung der Synchronisationseinrichtung 5 ist ein aus elastomerem Material gebildetes, scheibenförmiges Element 841 befestigt; da das Zahnrad 53 auf seiner äußeren Fläche mit einer Stirnverzahnung oder dgl. versehen ist, wird das Zahnrad 53 infolge des von der Blattfeder 840 ausgeübten Drucks von der elastomeren Scheibe 841 abgebremst. Die Synchronisationseinrichtung 5 ist somit blokkiert, so daß eine unbeabsichtigte Drehung der Stellspindeln verhindert wird. Wenn der Drehhebel bei Betätigung der Bremse nach links verschwenkt wird, gerät die Blattfeder 840 außer Eingriff mit dem unteren Ende des Lagerzapfens 531 des Zahnrads 53, wodurch das Zahnrad 53 nicht länger von der Scheibe 841 abgebremst wird. Somit kann sich das Zahnrad 53 ungehindert drehen, so daß die Synchronisationseinrichtung 5 eine eventuell erforderliche Nachstellbewegung zur anderen Stellspindel übertragen kann.

Die elastomere Scheibe 831 kann beispielsweise aus Gummimaterial bestehen.

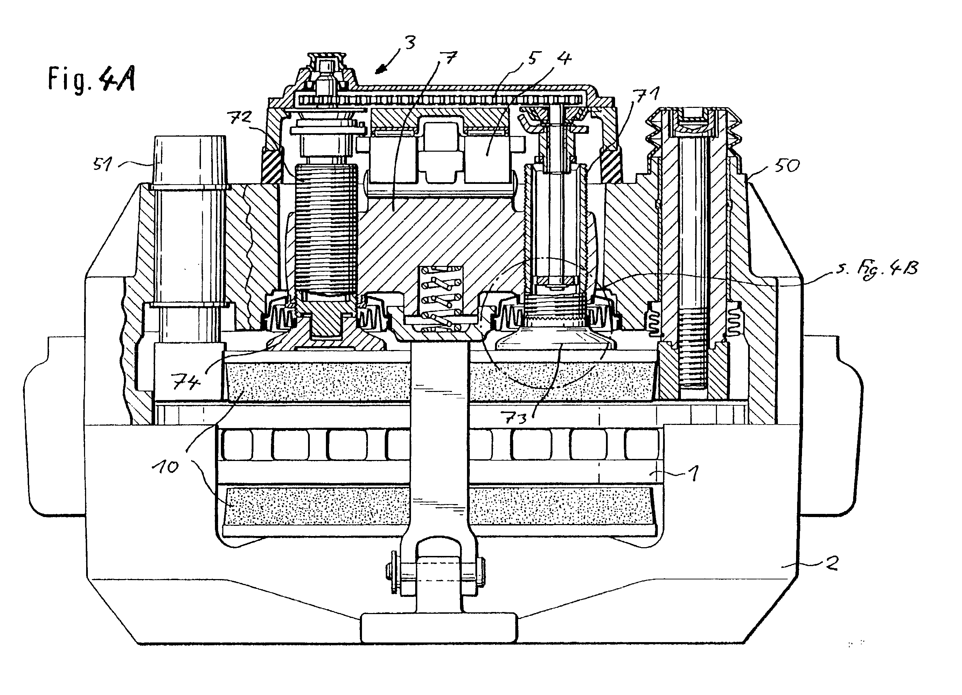

In den Fig.4A und 4B ist eine noch weitere Ausführungsform gezeigt, bei der das bremsscheibenseitige Ende der Stellspindel 71 mit einer Stirnverzahnung 821 versehen ist, die in eine entsprechende Gegen-Stirnverzahnung 820 ihres Druckstücks 73 eingreift. Da das Druckstück 73 aufgrund seiner Anlage an der Bremsbacke 10 sowie aufgrund der Einspannung durch den Faltenbalg 90 nicht drehen kann, ist die Stellspindel 71 ebenfalls an einer Drehung gehindert, so daß bei einer Rüttelbeanspruchung keine unbeabsichtigte Verstellung des Lüftspiels erfolgen kann. Die Zahnhöhe der Stirnverzahnung 820 bzw. 821 ist so gewählt, daß sie dem gewünschten Soll-Lüftspiel entspricht. Wenn das Lüftspiel aufgrund des Abriebs der Bremsbacken 10 das Soll-Lüftspiel übersteigt, geraten die beiden Stirnverzahnungen außer Eingriff, so daß die Nachstelleinrichtung die Stellspindeln zum erneuten Einstellen des Soll-Lüftspiels drehen kann. Somit wird erreicht, daß auch bei extremer Rüttelbeanspruchung stets ein konstantes Soll-Lüftspiel vorliegt.

In der Ausführungsform der Fig.4A und 4B ist die Stirnverzahnung lediglich in der rechten, über der Synchronisationseinrichtung 5 mit der linken Stellspindel 72 gekoppelten Stellspindel 71 vorgesehen. Gegebenenfalls kann jedoch auch in Erwägung gezogen werden, die linke Stellspindel 72 und deren Druckstück 74 mit einer entsprechenden Stirnverzahnung auszurüsten, obgleich dies aufgrund der Kupplung über die Synchronisationseinrichtung 5 nicht unbedingt erforderlich ist.

Obgleich die Erfindung anhand einer zweispindeligen Zuspannvorrichtung erläutert wurde, ist sie mit Ausnahme der auf die Synchronisationseinrichtung 5 gerichteten Ausführungsbeispiele selbstverständlich auch bei einer einspindeligen Zuspannvorrichtung verwendbar.

Die Erfindung ist auch bei einer solchen Synchronisationseinrichtung anwendbar, bei der eine im wesentlichen im Bereich der Achse des Exzenters verlaufende Welle vorgesehen ist, die an jeder Stirnseite ein Kegelrad aufweist, das mit einem entsprechenden Kegelrad der Nachstelleinrichtung kämmt, so daß ein entsprechender Winkeltrieb gebildet wird. Diese die oben erwähnten Zahnriemen oder Gliederketten ersetzende Welle benötigt keinerlei zusätzlichen Platz, so daß die Synchronisationseinrichtung ohne nennenswerten Einfluß auf die Platzverhältnisse im Inneren der Zuspannvorrichtung eingebaut werden kann. Auch hier ist es möglich, die Welle und damit die Synchronisation durch geeignete, ggf. drehhebelbetätigte Klemmeinrichtungen bei Bedarf bzw. im gelösten Zustand der Bremse zu blockieren. Bezüglich näherer Einzelheiten einer derartigen Synchronisationseinrichtung wird im übrigen auf die **DE-OS 43 08 704** der Anmelderin voll inhaltlich bezug genommen.

## Patentansprüche

1. Druckluftbetätigte Scheibenbremse mit einem eine Bremsscheibe (1) umfassenden Bremssattel, auf dessen einer Seite eine Zuspannvorrichtung mit einem schwenkbar gelagerten Drehhebel (4) angeordnet ist, der mittels eines Exzenters (6) etwa längsmittig an einer sich parallel zur Drehachse erstreckenden Traverse (7) anliegt, die bezüglich der Bremsscheibe (1) verschiebbar geführt ist und in der mindestens eine Stellspindel (70, 71) verstellbar verschraubt ist, die über ein an ihrem bremsscheibenseitigen Ende sitzendes Druckstück (72, 73) auf eine zuspannseitig im Bremssattel (2) bezüglich der Bremsscheibe (1) verschiebbar gelagerte Bremsbacke (10) einwirkt, wobei eine Nachstelleinrichtung auf die Stellspindel(n) (70, 71) derart einwirkt, daß das sich infolge Belagverschleiß ändernde Lüftspiel im wesentlichen konstant bleibt, **dadurch gekennzeichnet, daß eine Einrichtung** (80, 800, 810, 815) vorgesehen ist, die jedes Drehen der Stellspindel(n) (70, 71) bis zu einem bestimmten Drehmoment verhindert, wobei die genannte Einrichtung ein als Reibring ausgebildetes elastisches Element ist, das direkt auf die Gewindefläche der Stellspindeln (70, 71) einwirkt.

2. Scheibenbremse nach Anspruch 1, **dadurch gekennzeichnet, daß** der Reibring (80) aus Gummi oder dergleichen besteht, am bremsscheibenzugewandten und/oder bremsscheibenabgewandten Ende der betreffenden Gewindebohrung der Traverse (7) befestigt ist und einen Innendurchmesser hat, der kleiner als der Außendurchmesser der Stellspindel(n) (70, 71) ist (Fig. 1A, 1B).

## Claims

1. Air-operated disc brake comprising a brake calliper including a brake disc (1), with a brake application means with a pivotally supported rotating lever (4) being disposed on one side of the calliper, which rotating lever bears against a cross arm (7) extending in parallel with the axis of rotation by means of an eccentric (6) in an approximately longitudinally central position, which cross arm is guided so as to be displaceable relative to the brake disc (1) and in which at least one adjusting spindle (70, 71) is screwed so as to be adjustable, the latter acting via a thrust member (72, 73) located at its end which is on the brake disc side on a brake shoe (10) which is supported so as to be displaceable relative to the brake disc (1) in the brake calliper (2) on the brake application side, wherein a regulating means acts on the adjusting spindle(s) (70, 71) in such a way that the venting clearance, which varies as a result of wear of the lining, remains substantially constant,
**characterised in that**
a means (80, 800, 810, 815) is provided which prevents any rotation of the adjusting spindle(s) (70, 71) up to a specified torque, wherein the said means is a resilient element formed as a friction ring and acting directly on the thread surface of the adjusting spindle(s) (70, 71).

2. Disc brake according to Claim 1, **characterised in that** the friction ring (80) consists of rubber or a similar material, is fastened to the end of the relevant threaded bore in the cross arm (7) that faces and/or faces away from the brake disc and has an internal diameter which is smaller than the external diameter of the adjusting spindle(s) (70, 71) (Figs. 1A, 1B).

## Revendications

1. Frein à disque actionné par air comprimé, comprenant un étrier de frein ayant un disque (1) de frein, sur un côté duquel est disposé un moyen d'application du frein ayant un levier (4) tournant, monté pivotant, lequel levier pivotant porte contre une traverse (7), qui s'étend parallèlement à l'axe de rotation, au moyen d'un excentrique (6) en une position approximativement centrale en sens longitudinal, laquelle traverse est guidée de façon à coulisser relativement au disque de frein et comprend au moins une broche de réglage (70, 71), qui y est vissée pour le déplacement et qui agit, par l'intermédiaire d'une pièce (72, 73) de pression disposée sur son extrémité du côté du disque de frein, sur une mâchoire (10) de frein montée coulissante relativement au disque (1) de frein dans l'étrier (2) du côté d'application du frein, un moyen de rattrapage de jeu agissant sur la (les) broche(s) de réglage (70, 71) de manière que le jeu, qui varie en raison de l'usure de la garniture de frein, reste essentiellement constant,
**caractérisé en ce que**
il est prévu un dispositif (80, 800, 810, 815) qui empêche toute rotation des broches de réglage (70, 71) jusqu'à un couple de notation déterminé, le dispositif étant un élément élastique (80) constitué sous la forme d'un anneau de frottement, qui agit directement sur la surface de filetage de la (des) broche(s) (70, 71) de réglage.

2. Frein à disque selon la revendication 1, **caractérisé en ce que** l'anneau de frottement (80) est en caoutchouc ou en un matériau similaire, qui est fixé sur l'extrémité respective de l'alésage taraudé dans la traverse (7), qui se trouve en face de et/ou est opposée au disque de frein et qui présente un diamètre intérieur qui est plus petit que le diamètre extérieur de la (des) broche(s) (70, 71) de réglage (figures 1A, 1B).
